# EUROPEAN PATENT APPLICATION

(11) **EP 4 752 771 A1**
(43) Date of publication of application: **03.06.2026**
(21) Application number: 25218386.8
(22) Date of filing: 25.11.2025
(51) Int. Cl.: G06F 21/62, G06N 3/045

(54) **DATA FORMAT DRIFT PROTECTION FOR APPLICATION PROGRAMMING INTERFACES**

(30) Priority: 27.11.2024 US 202463726012 P
(71) Applicant: Capital One Services, LLC, McLean, Virginia 22102 (US)
(72) Inventor: PANDA, Meenakshi, McLean, VA 22102 (US); BAZLER, Marek, McLean, VA 22102 (US); JOSHI, Rohit, McLean, VA 22102 (US); CHENG, Hao, McLean, VA 22102 (US); GUPTA, Ashish Prasad, McLean, VA 22102 (US)
(74) Representative: Boult Wade Tennant LLP

(57) **Abstract**

Aspects discussed herein may relate to methods and techniques for scanning application programming interface requests and responses to more readily identify data issues. The system may aggregate one or more data requests and/or responses according to correlated data transactions between devices. The system may then analyze traffic associated with those requests to determine if the responses are consistent with data policies. If a response is out of line with such policies, a system for reporting and correction are described.

## Description

### FIELD AND BACKGROUND OF THE INVENTION

Modern computer architectures, such as the architectures of server and networking nodes in a largescale network, can be extremely complicated and difficult to analyze. This can create significant problems for computing systems designed to communicate externally subject to policies regarding data encryption and security. For example, external and internal actors may have different levels of access, and encryption of data transmissions may not occur at every link (e.g., data may be encrypted externally, but not internally).

Identifying unprotected sensitive data exchanged at runtime, such as program calls that hop from one system to another is a challenging task and becomes further complicated if it has to be done at scale where billions of transactions happen in a day with thousands of transactions per second.

Aspects described herein may address these and other problems, and generally improve the ability to determine whether data transmission policies are being followed. Aspects of the disclosure relate generally to machine learning, such as by analyzing responses to determine if a given response is authorized in view of aggregated requests for information.

### BRIEF STATEMENT OF THE INVENTION

The following presents a simplified summary of various aspects described herein. This summary is not an extensive overview, and is not intended to identify key or critical elements or to delineate the scope of the claims. The following summary merely presents some concepts in a simplified form as an introductory prelude to the more detailed description provided below.

A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions. For example, a computer-implemented method may include receiving, from an application programming interface (API) gateway, a request for information from a first device, where the request for information may include an API request for a second device. The method may also include receiving, from the API gateway, a response from the second device to the request for information. The method may also include determining that the response corresponds to the request for information. The method may also include aggregating, in a transitive memory, one or more responses that may include the request for response.

The method may also include analyzing, using a scanner and based on the scanner receiving the one or more responses, the response to determine whether the first device is authorized to receive the requested information. The method may include analyzing, using the scanner, the response to determine whether the response may include sensitive information. The method may include analyzing, using a machine learning model, the response to determine whether the response is authorized. The method may include analyzing, using the scanner, the response to determine whether a format of the response is drifting from one or more acceptable formats. The method may include analyzing, using the scanner, the response to determine whether the format of the response complies with one or more policies or agreements. The method may include providing, to the first device, the response.

According to a first aspect of the invention, there is provided a computer-implemented method comprising: receiving, from an Application Programming Interface (API) gateway, a request for information from a first device, wherein the request for information comprises an API request for a second device; receiving, from the API gateway, a response from the second device to the request for information; determining that the response corresponds to the request for information; aggregating, in a transitive memory, one or more responses comprising the request for response; analyzing, using a scanner and based on the scanner receiving the one or more responses, the response to determine whether the first device is authorized to receive the requested information; analyzing, using the scanner, the response to determine whether the response comprises sensitive information; analyzing, using a machine learning model, the response to determine whether the response is authorized; analyzing, using the scanner, the response to determine whether a format of the response is drifting from one or more acceptable formats; analyzing, using the scanner, the response to determine whether the format of the response complies with one or more policies or agreements; and providing, to the first device, the response.

In some embodiments, the computer-implemented method further comprises: analyzing the request for information to determine whether the first device is authorized to access the requested information; and transmitting the request for information to the second device based on a determination that the first device is authorized to access the requested information.

In some embodiments, the computer-implemented method further comprises: receiving, from the first device, a second request for information, wherein the second request for information comprises a second API request; determining whether the first device is authorized to access the second requested information; and based on a determination that the first device is not authorized to access the second requested information, block the second request for information. In some such embodiments, the computer-implemented method may further comprise: sending, in response to blocking the second request for information, an alert to a cybersecurity dashboard.

In some embodiments, the computer-implemented method further comprises: receiving, from the first device, a second request for information, wherein the second request for information comprises a second API request; transmitting, to a second device, the second request for information; receiving, from the second device, a second response to the second request for information; analyzing, using the scanner, the response to determine whether the second response comprises second sensitive information; based on a determination that the second response comprises second sensitive information, determining whether the second sensitive information is encrypted; based on a determination that the second sensitive information is not encrypted, encrypting the second sensitive information; and transmitting, to the first device, the second response comprising the encrypted second sensitive information.

In some embodiments, the computer-implemented method further comprises: analyzing, prior to transmitting the request for information to the second device, the request for information to determine whether the request for information complies with one or more data loss prevent policies or data governance policies; and transmitting the request for information to the second device based on a determination that the request for information complies with one or more data loss prevent policies or data governance policies.

In some embodiments, the computer-implemented method further comprises: receiving, from the first device, a second request for information, wherein the second request for information comprises a second API request; determining whether the second request for information complies with one or more data loss prevent policies or data governance policies; and based on a determination that the second request for information does not comply with one or more data loss prevent policies or data governance policies, blocking the second request for information.

In some embodiments, the computer-implemented method further comprises: training the machine learning model to identify one or more sensitive information in API calls and API responses.

In some embodiments, the machine learning model comprises a natural language processing (NLP) model.

In some embodiments, the machine learning model comprises a convolutional neural network.

In some embodiments, the first device and the second device are associated with a same entity.

In some embodiments, the first device and the second device are associated with different entities.

According to a second aspect of the invention, there is provided a computer-implemented method comprising: receiving, from a first device and via an Application Programming Interface (API) gateway, a request for information, wherein the request for information comprises an API request; aggregating the request for information along with one or more other requests for information in a local memory for bulk transmission to a scanner; analyzing, using the scanner and after receipt of the request for information by the scanner, the request for information to determine whether the first device is authorized to access the requested information; based on a determination that the first device is authorized to access the requested information, analyzing, using the scanner, the request for information to determine whether a format of the request for information is drifting from one or more acceptable formats; based on a determination that the format of the request for information is drifting from the one or more acceptable formats, outputting an indication that the request for information is not in an acceptable format.

In some embodiments, the computer-implemented method further comprises: analyzing the request for information to determine whether the first device is authorized to access the requested information; and transmitting the request for information to a second device based on a determination that the first device is authorized to access the requested information.

In some embodiments, the computer-implemented method further comprises: receiving, from the first device, a second request for information, wherein the second request for information comprises a second API request; determining whether the first device is authorized to access the second requested information; and based on a determination that the first device is not authorized to access the second requested information, block the second request for information. In some such embodiments, the method may further comprise: sending, in response to blocking the second request for information, an alert to a cybersecurity dashboard.

In some embodiments, the analyzing comprises analyzing using a machine learning model comprising one or more of a convolutional neural network or a natural language processing (NLP) model.

According to a third aspect of the invention, there is provided an apparatus comprising: a scanner; a transitory memory; one or more processors; and non-transitory memory storing instructions that, when executed by the one or more processors, cause the apparatus to: receive, from a first device and via an Application Programming Interface (API) gateway, a request for information, wherein the request for information comprises an API request; aggregate, in the transitory memory, the request for information along with one or more other requests for information for bulk transmission to the scanner; analyze, using the scanner after receipt of the request for information by the scanner, the request for information to determine whether the first device is authorized to access the requested information; based on a determination that the first device is authorized to access the requested information, analyze, using the scanner, the request for information to determine whether a format of the request for information is drifting from acceptable formats; and based on a determination that the format of the request for information is drifting from acceptable formats, output an indication that the request for information is not in an acceptable format.

In some embodiments, the instructions, when executed by the one or more processors, further cause the apparatus to transmit the request for information to a second device based on a determination that the first device is authorized to access the requested information.

In some embodiments, the instructions, when executed by the one or more processors, cause the apparatus to analyze the request for information using a machine learning model comprising one or more of a convolutional neural network or a natural language processing (NLP) model.

Corresponding apparatus, systems, and computer-readable media are also within the scope of the disclosure.

These features, along with many others, are discussed in greater detail below.

### BRIEF DESCRIPTION OF THE DRAWINGS

The present disclosure is illustrated by way of example and not limited in the accompanying figures in which like reference numerals indicate similar elements and in which:
FIG. 1 illustrates an example of a computing device that may be used to implement one or more illustrative aspects discussed herein;
FIG. 2 illustrates an example deep neural network architecture;
FIG. 3 illustrates an example traffic analysis system; and
FIG. 4 illustrates an example method for analyzing data traffic requests and responses.

### DETAILED DESCRIPTION

In the following description of the various embodiments, reference is made to the accompanying drawings, which form a part hereof, and in which is shown by way of illustration various embodiments in which aspects of the disclosure may be practiced. It is to be understood that other embodiments may be utilized and structural and functional modifications may be made without departing from the scope of the present disclosure. Aspects of the disclosure are capable of other embodiments and of being practiced or being carried out in various ways. Also, it is to be understood that the phraseology and terminology used herein are for the purpose of description and should not be regarded as limiting. Rather, the phrases and terms used herein are to be given their broadest interpretation and meaning. The use of "including" and "comprising" and variations thereof is meant to encompass the items listed thereafter and equivalents thereof as well as additional items and equivalents thereof.

By way of introduction, aspects of the disclosure may allow for monitoring information passing through a computer architecture, both internally and externally. For example, the system may utilize one or more application programming interface (API) gateways in order to monitor traffic. In an ideal embodiment, all traffic would pass through the gateways, though in many instances only some traffic will be passed through (e.g., due to hardware bandwidth or latency concerns). This presents an opportunity to centrally enforce governance and control over what data is share, how that data is shared, and with who it is shared.

The system may opportunistically scan requests (e.g., HTTP or REST API requests) in an asynchronous manner on filtered traffic. For example, some or all traffic may be scanned. In doing so, the system may operate by using one or more proxies to relay data to be acted upon to a gateway while the request is sent to a receiver. This may have the advantage of avoiding degredation of gateway performance or the customer experience due to latencies that may be imposed by certain large-scale payload inspection services (e.g., certain packet sniffing approaches that may inject latency into the system).

In some instances, filtered traffic may be be relayed through a dedicated component that would efficiently capture the request and response payloads in memory. The captured payload may be periodically flushed to a scanner to prevent memory growth. The captured payload may be non-persistent, such that it is discarded as soon as scanning has been completed to reduce the possibility of future data breaches. Captured API payload may be sent from the node capturing it to the scanner over authenticated channels, such as using a unique payload protection and proprietary binary message formatting techniques to prevent the network from being overwhelmed. The same API payload may be sent to the scanner, which may perform differential analysis including detection of unprotected sensitive data, deviation from API payload schema from the published Open API 3.0 design specification, detection of data elements shared without customer consent with different 3rd Parties or Systems, or detection of data that ideally should be redacted based on risk status.

Analysis of deviations may be accomplished by using a machine learning system to analyze traffic, which may be aggregated, and determine deviations from expected behaviors and/or set policies. This may have the advantage of providing automated systems for automatically determine risk instances. In some instances, there may be some level of human oversight. For example, risk instances flagged by the machine learning system may be sent to a human for analysis. Given that in large systems billions of data transactions may occur daily, this may allow all data to be effectively screened in a manner that would be impossible if the system were to instead rely on direct human analysis of the data transmissions. In other instances, a rules-based approach may send data satisfying a certain risk threshold to a human for analysis in bulk.

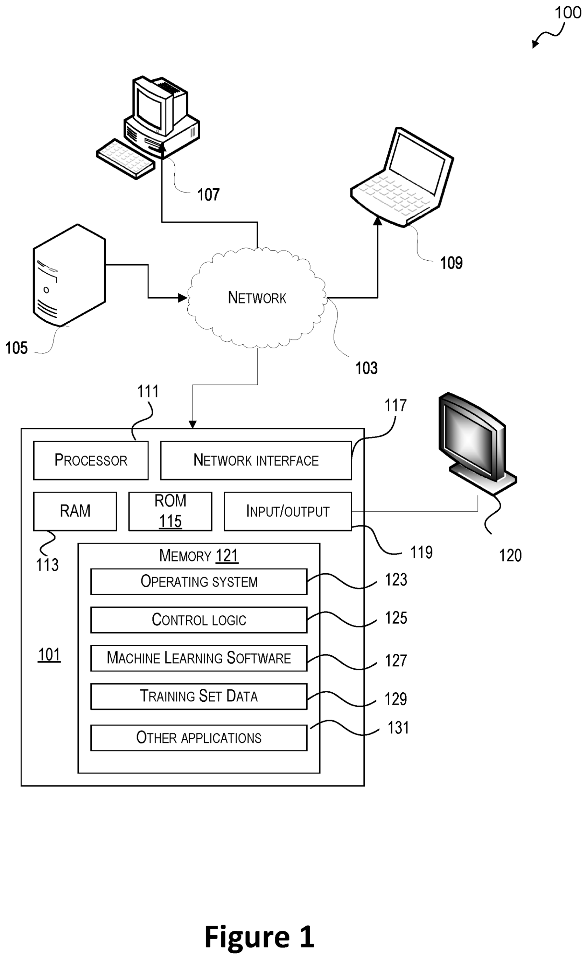

Before discussing these concepts in greater detail, however, several examples of a computing device that may be used in implementing and/or otherwise providing various aspects of the disclosure will first be discussed with respect to FIG. 1.

FIG. 1 illustrates a computing environment 100 comprising one example of a computing device 101 that may be used to implement one or more illustrative aspects discussed herein. For example, computing device 101 may, in some embodiments, implement one or more aspects of the disclosure by reading and/or executing instructions and performing one or more actions based on the instructions. In some embodiments, computing device 101 may represent, be incorporated in, and/or include various devices such as a desktop computer, a computer server, a mobile device (e.g., a laptop computer, a tablet computer, a smart phone, any other types of mobile computing devices, and the like), and/or any other type of data processing device.

Computing device 101 may, in some embodiments, operate in a standalone environment. In others, computing device 101 may operate in a networked environment. As shown in FIG. 1, various network nodes 101, 105, 107, and 109 may be interconnected via a network 103, such as the Internet. Other networks may also or alternatively be used, including private intranets, corporate networks, LANs, wireless networks, personal networks (PAN), and the like. Network 103 is for illustration purposes and may be replaced with fewer or additional computer networks. A local area network (LAN) may have one or more of any known LAN topology and may use one or more of a variety of different protocols, such as Ethernet. Devices 101, 105, 107, 109 and other devices (not shown) may be connected to one or more of the networks via twisted pair wires, coaxial cable, fiber optics, radio waves or other communication media.

As seen in FIG. 1, computing device 101 may include a processor 111, RAM 113, ROM 115, network interface 117, input/output interfaces 119 (e.g., keyboard, mouse, display, printer, etc.), and memory 121. Processor 111 may include one or more computer processing units (CPUs), graphical processing units (GPUs), and/or other processing units such as a processor adapted to perform computations associated with machine learning. I/O 119 may include a variety of interface units and drives for reading, writing, displaying, and/or printing data or files. I/O 119 may be coupled with a display such as display 120. Memory 121 may store software for configuring computing device 101 into a special purpose computing device in order to perform one or more of the various functions discussed herein. Memory 121 may store operating system software 123 for controlling overall operation of computing device 101, control logic 125 for instructing computing device 101 to perform aspects discussed herein, machine learning software 127, training set data 129, and other applications 129. Control logic 125 may be incorporated in and may be a part of machine learning software 127. In other embodiments, computing device 101 may include two or more of any and/or all of these components (e.g., two or more processors, two or more memories, etc.) and/or other components and/or subsystems not illustrated here.

Devices 105, 107, 109 may have similar or different architecture as described with respect to computing device 101. Those of skill in the art will appreciate that the functionality of computing device 101 (or device 105, 107, 109) as described herein may be spread across multiple data processing devices, for example, to distribute processing load across multiple computers, to segregate transactions based on geographic location, user access level, quality of service (QoS), etc. For example, devices 101, 105, 107, 109, and others may operate in concert to provide parallel computing features in support of the operation of control logic 125 and/or software 127.

One or more aspects discussed herein may be embodied in computer-usable or readable data and/or computer-executable instructions, such as in one or more program modules, executed by one or more computers or other devices as described herein. Generally, program modules include routines, programs, objects, components, data structures, etc. that perform particular tasks or implement particular abstract data types when executed by a processor in a computer or other device. The modules may be written in a source code programming language that is subsequently compiled for execution, or may be written in a scripting language such as (but not limited to) HTML or XML. The computer executable instructions may be stored on a computer readable medium such as a hard disk, optical disk, removable storage media, solid state memory, RAM, etc. As will be appreciated by one of skill in the art, the functionality of the program modules may be combined or distributed as desired in various embodiments. In addition, the functionality may be embodied in whole or in part in firmware or hardware equivalents such as integrated circuits, field programmable gate arrays (FPGA), and the like. Particular data structures may be used to more effectively implement one or more aspects discussed herein, and such data structures are contemplated within the scope of computer executable instructions and computer-usable data described herein. Various aspects discussed herein may be embodied as a method, a computing device, a data processing system, or a computer program product.

Having discussed several examples of computing devices which may be used to implement some aspects as discussed further below, discussion will now turn to systems and methods for architecture detection and predictive self-healing.

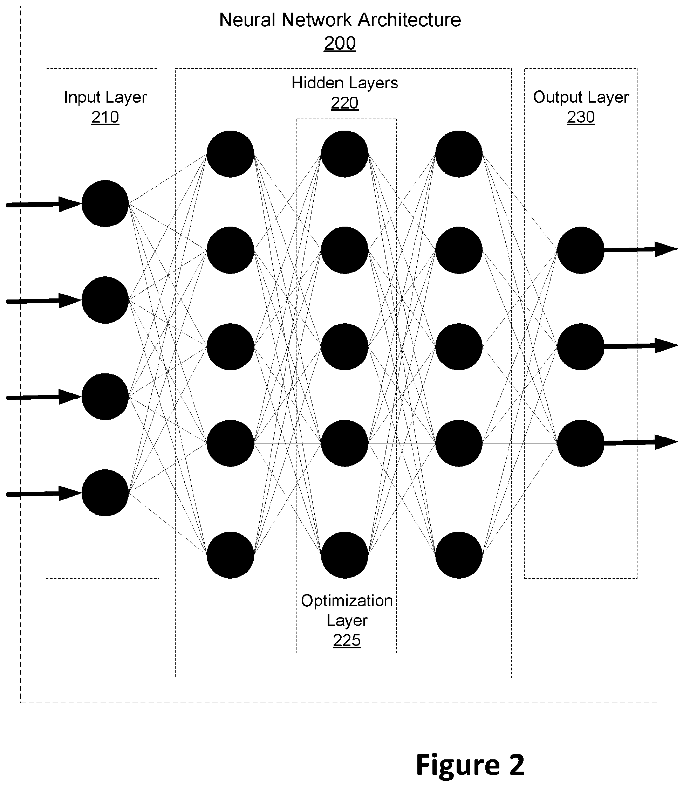

FIG. 2 illustrates an example deep neural network architecture 200. Such a deep neural network architecture may be all or portions of the machine learning software 127 shown in FIG. 1. That said, the architecture depicted in FIG. 2 need not be performed on a single computing device, and may be performed by, *e.g.,* a plurality of computers (*e.g.,* one or more of the devices 101, 105, 107, 109). An artificial neural network may be a collection of connected nodes, with the nodes and connections each having assigned weights used to generate predictions. Each node in the artificial neural network may receive input and generate an output signal. The output of a node in the artificial neural network may be a function of its inputs and the weights associated with the edges. Ultimately, the trained model may be provided with input beyond the training set and used to generate predictions regarding the likely results. Artificial neural networks may have many applications, including object classification, image recognition, speech recognition, natural language processing (NLP), text recognition, regression analysis, behavior modeling, and others.

An artificial neural network may have an input layer 210, one or more hidden layers 220, and an output layer 230. A deep neural network, as used herein, may be an artificial network that has more than one hidden layer. Illustrated network architecture 200 is depicted with three hidden layers, and thus may be considered a deep neural network. The number of hidden layers employed in deep neural network 200 may vary based on the particular application and/or problem domain. For example, a network model used for image recognition may have a different number of hidden layers than a network used for speech recognition. Similarly, the number of input and/or output nodes may vary based on the application. Many types of deep neural networks are used in practice, such as convolutional neural networks, recurrent neural networks, feed forward neural networks, combinations thereof, and others.

During the model training process, the weights of each connection and/or node may be adjusted in a learning process as the model adapts to generate more accurate predictions on a training set. The weights assigned to each connection and/or node may be referred to as the model parameters. The model may be initialized with a random or white noise set of initial model parameters. The model parameters may then be iteratively adjusted using, for example, stochastic gradient descent algorithms that seek to minimize errors in the model.

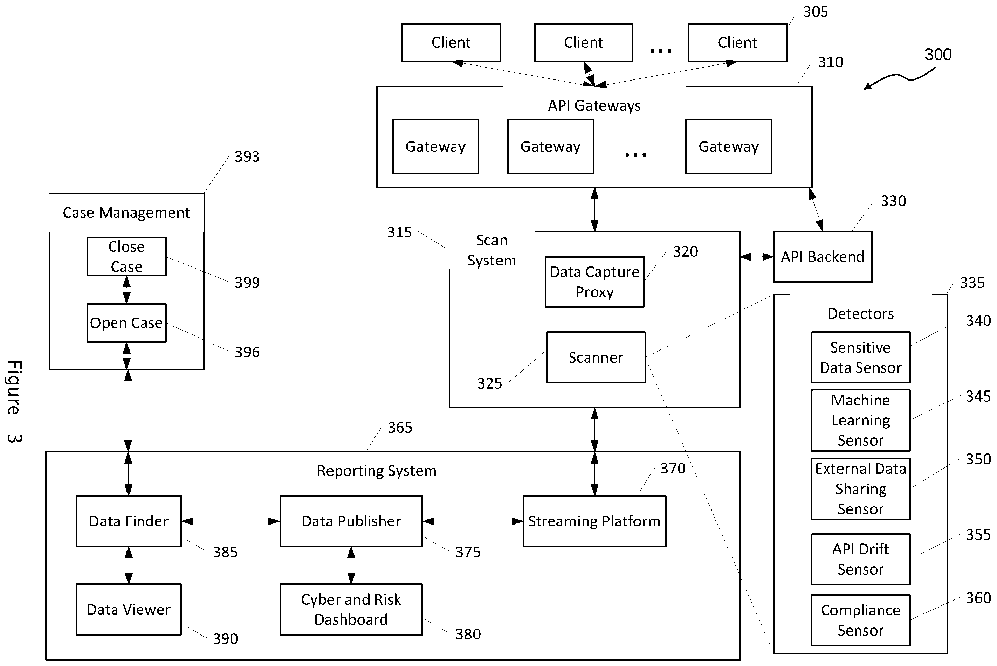

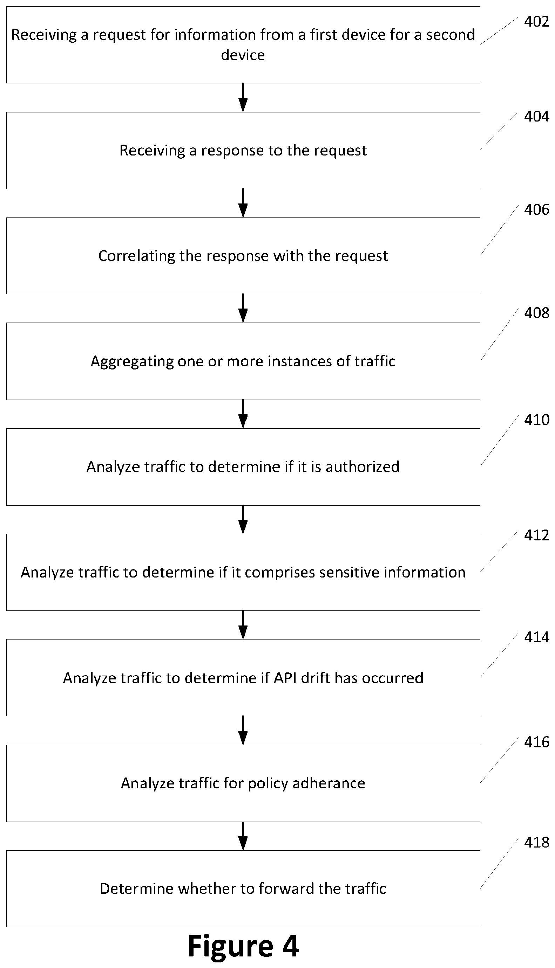

FIG. 3 illustrates an exemplary high-level overview of a traffic analysis system 300, as may be consistent with FIG. 4. The devices of traffic analysis system may comprise a computing environment 100, and the devices may be implemented as one or more devices as described above in FIG. 1 (e.g., a computing device 101). The traffic analysis system may represent one or more servers within a larger server architecture (e.g., a server network located within a corporate IT structure). For example, the traffic analysis system may represent multiple servers connected to multiple clients 305 (e.g., external clients such as customers, other businesses, data providers, etc.). Clients 305 may be connected to the system via one or more API gateways 310. API gateways 310 may comprise one or more intermediaries, such as for HTTP traffic. The API gateways 310 may be responsible for interfacing with client traffic, such as by enforcing authentication, authorization, and routing of the traffic to one or more API backends 330 within the server architecture. The API gateways 310 upon receipt of client traffic may verify authentication of the devices and/or information. The API gateways 310 may further verify if an API associated with an endpoint in the API backend 330 has a policy to enforce scanning of traffic payload, headers, or query parameters. The configured policy can be very flexible. For example, the policy may include a % of API endpoint traffic to be scanned, a time window during which the API endpoint traffic should be scanned, a size of data traffic to be scanned, an amount of traffic to be scanned within a time period, or any other such parameter as may be suitable. Note that the system may process requests and responses that may come from either the clients 305 or the API backend 330. For example, an API backend 330 endpoint may make an API request for another endpoint in the API backend 330.

If traffic is to be analyzed, it may be captured by a scan system 315. The scan system 315 may be responsible for conducting traffic analysis. For example, the scanner system may be responsible for processing a request to determine if a uniform resource identifier (URI), request header, request payload, etc. conforms with expected results. Upon receipt of a request (e.g., from an API gateway 310), the scan system 315 may comprise a data capture proxy 320 such that the request is forwarded to the target destination (e.g., a backend endpoint) but additionally mirrored to a scanner 325.

The data capture proxy 320 may be responsible for mirroring the data to and from the scanner 325. The data capture proxy 320 may coordinate with the API gateways 310 to capture traffic for analysis. For example, if received traffic satisfies one or more policies for analysis, a data traffic request may be proxied (e.g., the whole response and/or an extracted portion may be sent to scanner 325) from the API gateways 310 to the scanner 325. And when a response to the request is sent, that response may also be mirrored by the data capture proxy 320. This may be advantageous by reducing resource contentions on one or more API gateways 310 regarding remaining traffic that is not to be scanned.

The scanner 325 may be one or more devices configured to perform traffic analysis. For example, the scanner 325 may be configured to perform deep packet inspection, header inspection, passing sniffing, or other techniques to analyze packets. In some examples, the scanner 325 may analyze data traffic to determine if the data is encrypted. For example, the scanner 325 may determine whether data packets comprise encrypted payloads, such as by analyzing the payloads or header flags to determine if encryption is present.

The scanner 325 may use specialized algorithms, such as regular expressions, to detect specific types of sensitive data including SSNs, names, phone numbers, addresses, banking information, passwords, or other such information. The scanner 325 may also employ a machine learning model (e.g., employing a neural network architecture 200), which may be advantageous to reduce the rate of false positives. Further, the scanner 325 may not only detect sensitive data, but may also compile other information such as API ownership, API version numbers, data size and formatting, data request frequency, etc., to allow easier governance and tracking.

The scanner 325 may use a machine learning model to boost the confidence of detected sensitive data. For example, a machine learning model may improve the accuracy of detection of various highly sensitive human data elements. In some instances, a character CNN model may be used, because a character CNN may be more tolerant of misspellings, out of vocabulary words and specific for other such use cases involving highly sensitive use cases. Inputs of the model may be text as a sequence of numbers and/or words and associated context, while outputs may be multiple classes or a binary class. Further, other natural language processing models such as Bag of Words, N-grams, TF-IDF variants, and other Deep Learning Word-based models such as ConvNets and RNNs may be used.

The scanner 325 may comprise one or more detectors 335. The detectors 335 may comprise hardware and/or software for executing scanning functions of the scanner 325. For example, a sensitive data sensor 340 may be responsible for using regular expressions to determine if sensitive data is in a request or response. For example, sensitive data sensor 340 may determine if a 9-digit set of numbers is present, indicating an SSN. Machine learning sensor 345 may employ a neural network architecture 200, and may be configured to detect any number of restricted requests or responses. For example, the machine learning sensor 345 may be trained to detect sensitive data per the above. In another example, the machine learning sensor 345 may be trained to detect the formatting of the data, such as whether the data is compliant with API standards, or if the data is encrypted. An external data sharing sensor 350 may be configured to determine if a data request or response is being sent between authorized devices. For example, given an API request form a client 305, the external data sharing sensor 350 may determine if the data policy for a given request permits the client 305 to access the request. In some instances, one client 305 may be permitted to access all information in a database, while another client 305 may be permitted to access only some of that information. For example, a car financer may be permitted to request all personal information about a customer including sensitive financial information, whereas a car dealership may only be permitted to access publicly-available information and a credit score.

The API drift sensor 355 may determine if an API request or response is conformant with API standards. For example, a policy may be in place for the system to use a particular format for API calls, such as a particular version of OpenAPI. The API drift sensor 355 may analyze calls to determine if the calls are conformant to one or more standards specified for the API calls. If they are not, that may indicate that the APIs are not consistent with Open API, and/or that a requestor and responder are not consistent with their API usage. Compliance sensor 360 may determine if data compliance is being followed. For example, compliance sensor 360 may determine if a responding device, or a requesting device within the backend, is permitted to access a particular database comprising sensitive data.

The machine learning sensor 345 may be combined with, or operate in conjunction with, other sensors. For example, the machine learning sensor 345 may be used in conjunction with external data sharing sensor 350 to determine if a client 305 or API backend 330 endpoint is accessing sensitive information at a rate that is inconsistent with prior behaviors. In another example, the machine learning sensor 345 may work in conjunction with the API drift sensor 355 to determine if API calls are inconsistent with expected calls for a given API format schema.

The traffic analysis system 300 may further comprise a reporting system 365. The information gleaned by the scanner 325 may be forwarded to the reporting system 365 via a streaming platform 370. Examples of streaming platforms may be services from AWS, Azure, Apache, or other known data streaming services that support real-time data analysis and/or analytics. The data may be forwarded to a data publisher 375, which may publish to one or more databases or dashboards for consumption. For example, a cyber and risk (cybersecurity) dashboard 380 may present managers with the ability to monitor data interactions as they occur. An example dashboard may present a list of issues (or other data) in a variety of formats, including spreadsheets, architecture diagrams, database files, or any other suitable format for display in a dashboard application. The cyber and risk dashboard 380 may present information regarding issues needing oversight from a human, such as an IT manager. For example, the cyber and risk dashboard 380 may present issues at a threshold time (e.g., daily) in a report for an IT manager to review and ensure there are no data breaches. In another example, major derivations from expected behavior may trigger an immediate alert in the dashboard. For example, a flurry of activity requesting sensitive information (e.g., exceeding a threshold amount in a threshold time period) may trigger an alert for the IT manager to review. Machine learning, such as using machine learning sensor 345, may facilitate this process. For example, machine learning sensor 345 may operate to compare data requests for a given API backend 330 endpoint against historical requests. If those requests deviate (e.g., such as by having an unusual number of requests, request from unusual external entities, requests from unusual internal entities, etc.) the machine learning sensor 345 may cause the deviation to be flagged in the cyber and risk dashboard 380 for review. In some instances, if a deviation exceeds a threshold (e.g., a further threshold, such as additional attempts or requests, or a weighted risk threshold such as may be determined by the machine learning sensor 345) the system may suspend requests until a human confirms that the requests do not pose a danger of data breach or exposing sensitive information.

Information may also be compiled into a database associated with a data finder 385, which may be a program for searching databases for compiled data. For example, the data finder may enable a user on a data viewer 390. The data viewer 390 may be an interface for a user to view present or historical data. For example, a user may be permitted to view the rate of data requests for a particular API backend 330 endpoint, or type of data, over time. This may allow users to track data usage, and identify areas of concern.

If a problem is detected, a case management system 393 may be configured to permit correction of the problem. Upon detection a case opening system 396 may permit a case to be opened to examine the issue. Consistent with the discussion above, if an issue is detected the system may optionally suspend data transactions to avoid data breaches or exposure of sensitive information. At this stage, a ticket may be opened for a human to intervene and correct whatever issues have been flagged. For example, the system may have detected API drift, which may refer to deviations from API formatting and execution standards. This may trigger a ticket to examine the relevant APIs and correct any coding errors to ensure that any endpoints or conformant with API standards and eliminate the drift. In some instances, after the issue is resolved the user may close the ticket using case closure system 399. In other instances, the case closure system 399 may monitor data transactions further automatically to determine that errors are resolved. This may have the benefit of ensuring quality control of issues and promoting resolution of problems that may be intermittent (e.g., by monitoring for errors over a time period before allowing the ticket to close).

In accordance with the above detailed description, aspects described herein may provide a computer-implemented method for analyzing data traffic requests and responses. Exemplary steps of such a method are shown in FIG. 4. The system implementing the steps may be one or more computing devices, such as one or more computing devices 101 as may be depicted in Figure 1. The system may be configured consistent with a traffic analysis system 300, as may be depicted in Figure 3. The descriptions of those systems and their functionality may be consistent with the discussion below. The system may comprise one or more machine learning models, such as those discussed in Figures 2 and 3.

At step 402, the system may receive a request for information from a first device for a second device. The two devices may be any device, such as a client 305 or an API Backend 330 endpoint within a network architecture. The request for information may comprise a data request, such as an API call, that may have particular formats and requests. For example, the data request may be a request from a client 305 in an OpenAPI format requesting certain encrypted or sensitive information stored on a server associated with the API Backend 330. In another example, the data request may be a request from one endpoint in the API Backend 330 for another endpoint within the backend.

At step 404, the system may receive a response to the request. The response may be a data response and/or an API response. For example, the response may comprise data, which may comprise encrypted and/or sensitive information. An API response may comprise an indication that the data will or will not be returned, a request for further information, an acknowledgement of the request, or any other such administrative response by the system.

At step 406, the system may correlate the response with the request. In some instances, the response and the request may both comprise HTTP API calls. The HTTP API calls may comprise destination and sender addresses (e.g., IP or MAC addresses) or other such addresses that may identify the actors. The system may correlate the response to the request based on the addresses. In other instances, the system may use methods, such as appending a flag to a particular request, in order to track what requests correlate with what responses. In other instances, the system may actively facilitate the response for the request (e.g., by facilitating the API call for the request being routed to a particular device for response), and may correlate the request and response by virtue of managing the data transaction.

At step 408, the system may aggregate one or more instances of traffic. For example, the system may utilize a data capture proxy 320 to capture responses and requests (e.g., correlated as in step 406) and aggregate those requests for a scanner 325. Aggregation of requests may comprise storing the requests in a memory of the scan system 315 for batch processing. In some instances, the requests and/or responses may be stored in a short-term or transitory memory, such that the data may not be preserved. For example, data may be discarded as soon as analysis is performed and results sent. This may have the advantage of reducing the risk that encrypted or sensitive data captured by the data capture proxy 320 may be exposed if a device associated with scan system 315 were compromised. Further, by aggregating responses and/or requests the system may have the advantage of reducing continual overhead by virtue of batch transmissions or processing.

In some instances, the system may only aggregate certain responses or requests according to one or more rules. For example, rules may trigger aggregation if a certain threshold of responses and/or requests are reached. In another example, rules may trigger aggregation if certain sensitive data or encrypted data is requested. In another example, rules may trigger aggregation only at a certain frequency, such as a certain percentage of requests and/or a requests within a specified time period. In another example, manual rules might be set, such as to capture all responses and/or requests corresponding to a particular API format version to guard against API drift. API drift may refer to, for example, a tendency of devices and/or software in a system to diverge from expected formatting and/or behavior regarding API standards. For example, a system may specify a particular OpenAPI standard to be utilized, and API drift may refer to the extent to which the system deviates from that OpenAPI standard in its requests and/or responses.

In steps 410-416, the system may analyze traffic to determine its characteristics and perform any necessary analysis. The system may employ a scanner 325 and/or one or more detectors 335 (which may form part of the scanner 325) in performing that analysis. For example, the machine learning sensor 345 may be utilized to determine whether data meets one of the tests described herein. In another example, a detector may be used to perform regular expression testing to determine whether sensitive information (e.g., 9-digit numbers associated with SSNs, medical information, addresses, etc.) is present in data. It should be understood, as is stated elsewhere, that the analysis to be performed is configurable such that the analysis to be performed is optional at the discretion of one or more rules and/or an operator's discretion.

At step 410, the system may analyze traffic to determine if it is authorized. For example, the system (e.g., scan system 315) may analyze data requests to determine permissions associated with the request (e.g., by identifying the sender and/or determining permissions associated with a set of credentials associated with the request). The system may further determine if a response is consistent with that authorization. For example, a generic request for information may be responded to with data comprising sensitive information, even though a requester is not permitted to receive such information (or may not have requested such information).

At step 412, the system may analyze the traffic to determine if the response comprises sensitive information. For example, an API call for a customer's information may respond with a data entry for a customer comprising personal and financial information, even though the request should only be responded to with certain personal information and not the financial information.

At step 414, the system may analyze traffic to determine if API drift has occurred. Examples such as those described above in steps 410 and 412 may be examples of API drift. For example, a given API request may be designed to retrieve limited information based on an authorization of the client, but poor design causes the responding device to provide the information anyway. In another example, an API response may provide correctly authorized information, but the information may be formatted or otherwise provided in a manner inconsistent with API standards and policies.

At step 416, the system may analyze traffic for policy adherence. Data traffic policies regarding the amount of data, encryption of data, paths for data, recipients of data, frequency of data access, or any other such policy may be set for the system. For example, financial information may be required to be end-to-end encrypted as a matter of policy. However, the system may determine whether the sensitive information is properly encrypted. For example, the system may determine that the sensitive information is sent as plain text internal to a corporate server architecture associated with API backend 330 endpoints, and is only encrypted when sent externally. This breach of policy may enhance the risk of the sensitive information being exposed if the network is compromised, such as through a man-in-the-middle attack. By tracking policy adherence throughout the network, the system may reduce the risks of such data breaches by detecting a lack of policy adherence even when such deviations are not externally apparent (e.g., information is received via an encrypted file, but the information is improperly prepared and sent through the internal network in a non-encrypted form).

At step 418, the system may determine whether to forward the traffic. In instances where an issue is determined, the system may prevent a response from being sent to a client 305. For example, the data may be restricted from being sent to an API gateway 310, or a command may be sent to an API gateway 310 commanding it to not send the data. In other instances, the system may determine to forward the data to a reporting system 365 for analysis. For example, data that appears improperly unencrypted may be sent to the reporting system 365 to determine if it should have been encrypted. In another example, evidence of API drift may be sent to the reporting system 365. In some instances, a description of the data may be sent rather than the data itself. For example, a report indicating that an encrypted data was sent from a first device to a second device may be sent to the reporting system 365 without sending the actual encrypted data.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A computer-implemented method comprising:
receiving, from an Application Programming Interface (API) gateway, a request for information from a first device, wherein the request for information comprises an API request for a second device;
receiving, from the API gateway, a response from the second device to the request for information;
determining that the response corresponds to the request for information;
aggregating, in a transitive memory, one or more responses comprising the request for response;
analyzing, using a scanner and based on the scanner receiving the one or more responses, the response to determine whether the first device is authorized to receive the requested information;
analyzing, using the scanner, the response to determine whether the response comprises sensitive information;
analyzing, using a machine learning model, the response to determine whether the response is authorized;
analyzing, using the scanner, the response to determine whether a format of the response is drifting from one or more acceptable formats;
analyzing, using the scanner, the response to determine whether the format of the response complies with one or more policies or agreements; and
providing, to the first device, the response.

2. The computer-implemented method of claim 1, further comprising:
analyzing the request for information to determine whether the first device is authorized to access the requested information; and
transmitting the request for information to the second device based on a determination that the first device is authorized to access the requested information.

3. The computer-implemented method of claim 1 or 2, further comprising:
receiving, from the first device, a second request for information, wherein the second request for information comprises a second API request;
determining whether the first device is authorized to access the second requested information; and
based on a determination that the first device is not authorized to access the second requested information, block the second request for information;
wherein, optionally, the computer-implemented method further comprises: sending, in response to blocking the second request for information, an alert to a cybersecurity dashboard.

4. The computer-implemented method of any one of the preceding claims, further comprising:
receiving, from the first device, a second request for information, wherein the second request for information comprises a second API request;
transmitting, to a second device, the second request for information;
receiving, from the second device, a second response to the second request for information;
analyzing, using the scanner, the response to determine whether the second response comprises second sensitive information;
based on a determination that the second response comprises second sensitive information, determining whether the second sensitive information is encrypted;
based on a determination that the second sensitive information is not encrypted, encrypting the second sensitive information; and
transmitting, to the first device, the second response comprising the encrypted second sensitive information.

5. The computer-implemented method of any one of the preceding claims, further comprising:
analyzing, prior to transmitting the request for information to the second device, the request for information to determine whether the request for information complies with one or more data loss prevent policies or data governance policies; and
transmitting the request for information to the second device based on a determination that the request for information complies with one or more data loss prevent policies or data governance policies.

6. The computer-implemented method of any one of the preceding claims, further comprising:
receiving, from the first device, a second request for information, wherein the second request for information comprises a second API request;
determining whether the second request for information complies with one or more data loss prevent policies or data governance policies; and
based on a determination that the second request for information does not comply with one or more data loss prevent policies or data governance policies, blocking the second request for information.

7. The computer-implemented method of any one of the preceding claims, wherein:
(a) the method further comprises training the machine learning model to identify one or more sensitive information in API calls and API responses; and/or
(b) the machine learning model comprises a natural language processing (NLP) model and/or a convolutional neural network.

8. The computer-implemented method of any one of the preceding claims, wherein either (a) the first device and the second device are associated with a same entity or (b) the first device and the second device are associated with different entities.

9. A computer program that, when executed by one or more processors, causes the one or more processors to carry out a method comprising:
receiving, from a first device and via an Application Programming Interface (API) gateway, a request for information, wherein the request for information comprises an API request;
aggregating the request for information along with one or more other requests for information in a local memory for bulk transmission to a scanner;
analyzing, using the scanner and after receipt of the request for information by the scanner, the request for information to determine whether the first device is authorized to access the requested information;
based on a determination that the first device is authorized to access the requested information, analyzing, using the scanner, the request for information to determine whether a format of the request for information is drifting from one or more acceptable formats;
based on a determination that the format of the request for information is drifting from the one or more acceptable formats, outputting an indication that the request for information is not in an acceptable format.

10. The computer program of claim 9, the method further comprising:
analyzing the request for information to determine whether the first device is authorized to access the requested information; and
transmitting the request for information to a second device based on a determination that the first device is authorized to access the requested information.

11. The computer program of claim 9 or 10, the method further comprising:
receiving, from the first device, a second request for information, wherein the second request for information comprises a second API request;
determining whether the first device is authorized to access the second requested information; and
based on a determination that the first device is not authorized to access the second requested information, block the second request for information;
wherein, optionally, the method further comprises sending, in response to blocking the second request for information, an alert to a cybersecurity dashboard.

12. The computer program of any one of claims 9 to 11, wherein the analyzing comprising analyzing using a machine learning model comprising one or more of a convolutional neural network or a natural language processing (NLP) model.

13. An apparatus comprising:
a scanner;
a transitory memory;
one or more processors; and
non-transitory memory storing instructions that, when executed by the one or more processors, cause the apparatus to:
receive, from a first device and via an Application Programming Interface (API) gateway, a request for information, wherein the request for information comprises an API request;
aggregate, in the transitory memory, the request for information along with one or more other requests for information for bulk transmission to the scanner;
analyze, using the scanner after receipt of the request for information by the scanner, the request for information to determine whether the first device is authorized to access the requested information;
based on a determination that the first device is authorized to access the requested information, analyze, using the scanner, the request for information to determine whether a format of the request for information is drifting from acceptable formats; and
based on a determination that the format of the request for information is drifting from acceptable formats, output an indication that the request for information is not in an acceptable format.

14. The apparatus of claim 13, wherein the instructions, when executed by the one or more processors, further cause the apparatus to transmit the request for information to a second device based on a determination that the first device is authorized to access the requested information.

15. The apparatus of claim 13 or 14, wherein the instructions, when executed by the one or more processors, cause the apparatus to analyze the request for information using a machine learning model comprising one or more of a convolutional neural network or a natural language processing (NLP) model.
